# EUROPÄISCHE PATENTSCHRIFT

(11) **EP 3 925 835 B1**
(45) Veröffentlichungstag und Bekanntmachung des Hinweises auf die Patenterteilung: **14.08.2024**
(21) Anmeldenummer: 21173221.9
(22) Anmeldetag: 11.05.2021
(51) Int. Cl.: B60R 16/03, H02J 7/00, H02J 7/14, H02J 7/34

(54) **BORDNETZ FÜR EIN FAHRZEUG**
ON-BOARD ELECTRICITY NETWORK FOR A VEHICLE
RÉSEAU EMBARQUÉ POUR UN VÉHICULE

(30) Priorität: 15.06.2020 DE 102020115692
(43) Veröffentlichungstag der Anmeldung: 22.12.2021
(73) Patentinhaber: Eberspächer Controls Landau GmbH & Co. KG, 76829 Landau (DE)
(72) Erfinder: Wandres, Steffen, Kandel (DE)
(74) Vertreter: Ruttensperger Lachnit Trossin Gomoll

(56) Entgegenhaltungen:
- EP-A2- 2 272 722
- WO-A1-2013/131783
- WO-A2-2004/103771
- DE-A1- 102019 206 502

## Beschreibung

Die vorliegende Erfindung betrifft ein Bordnetz für ein Fahrzeug.

Bei in Fahrzeugen, die für ein hochautomatisiertes bzw. ein autonomes Fahren ausgebildet sind, besteht die Anforderung, die verschiedenen in einem derartigen Fahrzeug vorgesehenen, mit elektrischer Energie zu speisenden Verbraucher zuverlässig mit elektrischer Energie zu versorgen. Dies betrifft insbesondere als sicherheitsrelevante Systembereiche eingestufte Verbraucher elektrischer Energie, wie zum Beispiel Lenk- und Bremssysteme. Auch weniger sicherheitsrelevante, mit elektrischer Energie zu versorgende Systembereiche, wie zum Beispiel die Innenraumbeleuchtung eines Fahrzeugs, die Sitzheizung oder die Lenkradheizung, sollen zuverlässig gespeist werden können, wobei ein zumindest kurzzeitiger Ausfall dieser Systembereiche oder ein kurzzeitiges Abkoppeln dieser Systembereiche von der Energieversorgung akzeptiert werden kann, da dies nicht zu einer potenziell sicherheitsgefährdenden Situation führen kann.

Ein Bordnetz gemäß dem Oberbegriff des Anspruchs 1 ist aus der EP 2 272 722 A2 bekannt. Bei diesem bekannten Bordnetz ist in Zuordnung zu der in jedem der Netzbereiche vorgesehenen Gleichspannungsquelle eine Stromerfassungseinrichtung vorgesehen, vermittels welcher der durch jede der als Lithium-Batterien ausgebildeten Gleichspannungsquellen fließende Strom erfasst wird. Beruhend auf dieser Information wird ein übermäßiges Laden bzw. Entladen eine jeweiligen Gleichspannungsquelle durch Ansteuerung des zugeordneten Trennschalters verhindert.

Es ist die Aufgabe der vorliegenden Erfindung, ein Bordnetz für ein Fahrzeug vorzusehen, welches bei einfach und kostengünstig zu realisierender Bordnetztopologie gleichwohl eine hohe Betriebssicherheit gewährleistet.

Erfindungsgemäß wird diese Aufgabe gelöst durch ein Bordnetz für ein Fahrzeug, umfassend:
- einen ersten Netzbereich mit einer wiederaufladbaren ersten Gleichspannungsquelle und einer ersten Gruppe von Verbrauchern elektrischer Energie,
- einen zweiten Netzbereich mit einer wiederaufladbaren zweiten Gleichspannungsquelle und einer zweiten Gruppe von Verbrauchern elektrischer Energie,
- eine zwischen den ersten Netzbereich und den zweiten Netzbereich geschaltete Trennschalteranordnung mit einem ersten Trennschalter und einem zweiten Trennschalter, wobei jeder Trennschalter von erstem Trennschalter und zweitem Trennschalter in einem Leiter-Zustand den Stromfluss zwischen seinem Eingangsanschluss und seinem Ausgangsanschluss in beiden Richtungen zulässt und in einem Diode-Zustand einen Stromfluss nur vom Eingangsanschluss zum Ausgangsanschluss zulässt, wobei der Ausgangsanschluss des ersten Trennschalters mit dem ersten Netzbereich verbunden ist, der Eingangsanschluss des ersten Trennschalters mit dem Eingangsanschluss des zweiten Trennschalters verbunden ist und der Ausgangsanschluss des zweiten Trennschalters mit dem zweiten Netzbereich verbunden ist,
- einen dritten Netzbereich mit einer dritten Gleichspannungsquelle und einer dritten Gruppe von Verbrauchern elektrischer Energie, wobei der Eingangsanschluss des ersten Trennschalters und der Eingangsanschluss des zweiten Trennschalters mit dem dritten Netzbereich verbunden sind.

Ein Bordnetz mit einer derartigen Struktur bietet die Möglichkeit, insbesondere den ersten Netzbereich und den zweiten Netzbereich von den jeweils anderen Netzbereichen abzukoppeln und vorübergehend die einem derartigen abgekoppelten Netzbereich zugeordneten Verbraucher von elektrischer Energie aus der einem jeweils abgekoppelten Netzbereich auch zugeordneten Gleichspannungsquelle zu speisen. Ein zu einem übermäßig hohen Stromfluss führender Defekt, wie zum Beispiel ein Kurzschluss, kann somit nicht zu einem Spannungsabfall und einer Unterversorgung in einem abgekoppelten Netzbereich führen, da im abgekoppelten Zustand ein einem jeweiligen abgekoppelten Netzbereich zugeordneter Trennschalter in seinem Diode-Zustand ist und daher einen Stromfluss aus dem abgekoppelten Netzbereich heraus unterbindet.

Um eine redundante Versorgung mit elektrischer Energie verschiedener Verbraucher elektrischer Energie auch durch eine einem anderen Netzbereich zugeordnete Gleichspannungsquelle nicht bereits dann zu unterbinden, wenn in einem der grundsätzlich über die Trennschalteranordnung miteinander gekoppelten Netzbereiche eine hohe, jedoch nicht notwendigerweise auf einen Defekt, wie zum Beispiel einen Kurzschluss, zurückzuführende und von einem entsprechend hohen Stromfluss begleitete Belastung vorhanden ist, ist der erste Trennschalter dazu ausgebildet, bei in seinen Leiter-Zustand geschaltetem ersten Trennschalter dann in seinen Diode-Zustand zu schalten, wenn ein im Leiter-Zustand über den ersten Trennschalter fließender Rückstrom eine erste Stromschwelle übersteigt, oder/und ist der zweite Trennschalter dazu ausgebildet, bei in seinen Leiter-Zustand geschaltetem zweiten Trennschalter dann in seinen Diode-Zustand zu schalten, wenn ein im Leiter-Zustand über den zweiten Trennschalter fließender Rückstrom eine zweite Stromschwelle übersteigt. Erst dann, wenn der Rückstrom in einem der Trennschalter die zugeordnete Stromschwelle übersteigt, geht der Trennschalter in seinen Diode-Zustand über und beendet daher den Stromfluss aus diesem Netzbereich heraus.

Es ist in diesem Zusammenhang darauf hinzuweisen, dass im Sinne der vorliegenden Erfindung ein Rückstrom ein Stromfluss im Leiter-Zustand eines jeweiligen Trennschalters in einer Richtung ist, welche der Sperrrichtung des Trennschalters in seinem Diode-Zustand entspricht, also ein Stromfluss in Richtung vom Ausgangsanschluss zum Eingangsanschluss.

Um auch bei größeren Lasten einen Energieaustausch zwischen den verschiedenen Netzbereichen nicht zu unterbinden, wird vorgeschlagen, dass die erste Stromschwelle oder/und die zweite Stromschwelle in einem Bereich von 5A bis 90A, vorzugsweise bei etwa 50A bis 70A, liegt. Weiter kann die erste Stromschwelle der zweiten Stromschwelle entsprechen, so dass ein symmetrisches Schaltverhalten des ersten Trennschalters und des zweiten Trennschalters und auch ein symmetrisches Belastungsverhalten der diesen zugeordneten Gleichspannungsquellen erreicht werden kann.

Um die durch ein erfindungsgemäß aufgebautes Bordnetz bereitgestellte Sicherheit bei Auftreten von Zuständen, die zu einer Überlastung führen können, weiter zu erhöhen, wird vorgeschlagen, dass der erste Trennschalter dazu ausgebildet ist, bei in seinen Leiter-Zustand geschaltetem ersten Trennschalter dann in seinen Diode-Zustand zu schalten, wenn eine Netzspannung im ersten Netzbereich eine erste Unterspannungsschwelle unterschreitet, oder/und dass der zweite Trennschalter dazu ausgebildet ist, bei in seinen Leiter-Zustand geschaltetem zweiten Trennschalter dann in seinen Diode-Zustand zu schalten, wenn eine Netzspannung im zweiten Netzbereich eine zweite Unterspannungsschwelle unterschreitet. Damit wird gewährleistet, dass dann, wenn ein übermäßig hoher Stromfluss zu einem Spannungseinbruch in einem Netzbereich führt, durch das Übergehen in den Diode-Zustand ein derartiger Stromfluss unterbunden und damit eine ausreichende Netzspannung in diesem Netzbereich gewährleistet werden kann. Das Berücksichtigen einer derartigen Unterspannungsschwelle erhöht somit die Sicherheit insbesondere auch für den Fall, dass aufgrund eines Defekts in einem Trennschalter ein übermäßig hoher Stromfluss nicht zu einem Schalten in den Diode-Zustand führt. Mit dem Überwachen des Stromflusses über einen Trennschalter und der Spannung in dem diesem Trennschalter zugeordneten Netzbereich werden somit redundante Überwachungskriterien eingeführt bzw. in den Trennschalter integriert, welche zu einer sehr hohen Betriebssicherheit beitragen.

Beispielsweise kann die erste Unterspannungsschwelle oder/und die zweite Unterspannungsschwelle eine im Bereich von 0,5V bis 2V, vorzugsweise etwa 1V, unter einer für den ersten Netzbereich und den zweiten Netzbereich vorgesehenen Nennspannung liegende Netzspannung sein. Diese für die über die Trennschalteranordnung grundsätzlich miteinander gekoppelten Netzbereiche vorgesehene Nennspannung kann grundsätzlich der durch die Gleichspannungsquellen bereitzustellenden Spannung beispielsweise im Bereich von etwa 12V entsprechen. Um auch hier ein symmetrisches Schaltverhalten vorzusehen, kann die erste Unterspannungsschwelle der zweiten Unterspannungsschwelle entsprechen.

Die Sicherheit gegen ungeeignete Stromflüsse zwischen den verschiedenen Netzbereichen kann dadurch weiter erhöht werden, dass der erste Trennschalter dazu ausgebildet ist, bei in seinen Leiter-Zustand geschaltetem ersten Trennschalter dann in seinen Diode-Zustand zu schalten, wenn eine Netzspannung im ersten Netzbereich eine erste Überspannungsschwelle überschreitet, oder/und dass der zweite Trennschalter dazu ausgebildet ist, bei in seinen Leiter-Zustand geschaltetem zweiten Trennschalter dann in seinen Diode-Zustand zu schalten, wenn eine Netzspannung im zweiten Netzbereich eine zweite Überspannungsschwelle überschreitet. Ein derartiger übermäßiger Anstieg der Spannung in einem Netzbereich kann beispielsweise auftreten, wenn aufgrund ungünstiger Einwirkung auf einen Verbraucher elektrischer Energie dieser kurzzeitig nicht als Verbraucher, also beispielsweise als Motor, sondern als Generator wirkt.

Beispielsweise kann vorgesehen sein, dass die erste Überspannungsschwelle oder/und die zweite Überspannungsschwelle eine im Bereich von 2V bis 6V, vorzugsweise etwa 4V, über einer für den ersten Netzbereich und den zweiten Netzbereich vorgesehenen Nennspannung liegende Netzspannung ist, oder/und dass die erste Überspannungsschwelle der zweiten Überspannungsschwelle entspricht.

Eine weiter erhöhte Sicherheit insbesondere bei Auftreten von Fehlerzuständen im dritten Netzbereich kann dadurch erreicht werden, dass die Trennschalteranordnung einen dritten Trennschalter umfasst, wobei der dritte Trennschalter in einem Leiter-Zustand den Stromfluss zwischen seinem Eingangsanschluss und seinem Ausgangsanschluss in beiden Richtungen zulässt und in einem Diode-Zustand einen Stromfluss nur vom Eingangsanschluss zum Ausgangsanschluss zulässt, wobei der Eingangsanschluss des dritten Trennschalters mit dem dritten Netzbereich verbunden ist und der Ausgangsanschluss des dritten Trennschalters mit dem Eingangsanschluss des ersten Trennschalters und dem Eingangsanschluss des zweiten Trennschalters verbunden ist. Durch den dritten Trennschalter können der erste Netzbereich und der zweite Netzbereich vom dritten Netzbereich entkoppelt werden, während die Verbindung zwischen dem ersten Netzbereich und dem zweiten Netzbereich weiter aufrechterhalten wird. Sind beispielsweise dem dritten Netzbereich weniger sicherheitsrelevante Verbraucher elektrischer Energie zugeordnet, während dem ersten Netzbereich und dem zweiten Netzbereich die Verbraucher mit höherer Sicherheitsrelevanz zugeordnet sind, können diese sicherheitsrelevanteren Verbraucher auch bei einem Defekt im Bereich des dritten Netzbereichs redundant aus den beiden Gleichspannungsquellen des ersten Netzbereichs und des zweiten Netzbereichs gespeist werden.

Auch im Zusammenhang mit dem dritten Trennschalter ist es vorteilhaft, wenn dieser dazu ausgebildet ist, bei in seinen Leiter-Zustand geschaltetem dritten Trennschalter dann in seinen Diode-Zustand zu schalten, wenn ein im Leiter-Zustand über den dritten Trennschalter fließender Rückstrom eine dritte Stromschwelle übersteigt.

Die dritte Stromschwelle kann in einem Bereich von 5A bis 90A, vorzugsweise bei etwa 50A bis 70A, liegen.

Da bei Speisung des dritten Netzbereichs aus den beiden Gleichspannungsquellen des ersten Netzbereichs bzw. des zweiten Netzbereichs im dritten Trennschalter grundsätzlich ein höherer Stromfluss vorhanden sein wird, als in den beiden anderen Trennschaltern, ist es vorteilhaft, wenn die dritte Stromschwelle höher ist als die erste Stromschwelle oder/und die zweite Stromschwelle.

Um auch im Zusammenhang mit dem dritten Trennschalter zu einer weiter erhöhten Sicherheit führende Schaltkriterien einzuführen, wird vorgeschlagen, dass der dritte Trennschalter dazu ausgebildet ist, bei in seinen Leiter-Zustand geschaltetem dritten Trennschalter dann in seinen Diode-Zustand zu schalten, wenn eine Netzspannung im dritten Netzbereich eine dritte Unterspannungsschwelle unterschreitet, oder/und dass der dritte Trennschalter dazu ausgebildet ist, bei in seinen Leiter-Zustand geschaltetem dritten Trennschalter dann in seinen Diode-Zustand zu schalten, wenn eine Netzspannung im dritten Netzbereich eine dritte Überspannungsschwelle überschreitet.

Dazu kann beispielsweise vorgesehen sein, dass die dritte Unterspannungsschwelle eine im Bereich von 0,5V bis 2V, vorzugsweise etwa 1V, unter einer für den dritten Netzbereich vorgesehenen Nennspannung liegende Netzspannung ist, oder/und dass die dritte Überspannungsschwelle eine im Bereich von 2V bis 6V, vorzugsweise etwa 4V, über einer für den dritten Netzbereich vorgesehenen Nennspannung liegende Netzspannung ist.

Um über die Betriebslebensdauer hinweg die Belastung eines jeweiligen Trennschalters zu verringern und den Energieverbrauch bei deaktiviertem, also beispielsweise geparkten Fahrzeug zu minimieren, wird vorgeschlagen, dass wenigstens ein, vorzugsweise jeder Trennschalter bei deaktiviertem Fahrzeug in seinem Leiter-Zustand ist. Während das Schalten bzw. Halten eines jeweiligen Trennschalters in seinem Diode-Zustand einen vergleichsweise hohen Energieverbrauch involviert, können die in einem derartigen Trennschalter, welcher grundsätzlich nach der Art einer sogenannten Q-Diode aufgebaut sein kann, im Leiter-Zustand bereitzustellenden Funktionalitäten bei einem Ruhestrom von weniger als 100µA realisiert werden. Das Halten bzw. Belassen eines jeweiligen Trennschalters bei deaktiviertem Fahrzeug in seinem Leiter-Zustand wirkt sich somit nicht nur positiv auf dessen Betriebslebensdauer, sondern auch auf den Energieverbrauch in einem geparkten Fahrzeug aus.

Die dritte Gleichspannungsquelle kann beispielsweise einen vorzugsweise durch eine Brennkraftmaschine angetriebenen Generator umfassen. Bei einem elektrisch betriebenen Fahrzeug oder einem Hybridfahrzeug kann die dritte Gleichspannungsquelle eine allgemein auch als Traktionsbatterie bezeichnete Hochspannungsbatterie und einen Gleichstrom/Gleichstrom-Wandler umfassen. Derartige Hochspannungsbatterien sind für eine ausreichende Versorgung der elektrischen Fahrmotoren eines Fahrzeugs dazu ausgebildet, eine Spannung im Bereich von mehreren 100V bereitzustellen, welche dann in dem Gleichstrom/Gleichstrom-Wandler auf die im dritten Netzbereich und aufgrund der Kopplung aller Netzbereiche miteinander auch im ersten Netzbereich und im zweiten Netzbereich vorzusehende Nennspannung von beispielsweise etwa 12V herabgesetzt werden kann.

Die vorliegende Erfindung wird nachfolgend mit Bezug auf die beiliegenden Figuren detailliert beschrieben. Es zeigt:
- Fig. 1: in schematischer Darstellung ein Bordnetz für ein Fahrzeug;
- Fig. 2: eine der Fig. 1 entsprechende Darstellung einer alternativen Ausgestaltung eines Bordnetzes für ein Fahrzeug.

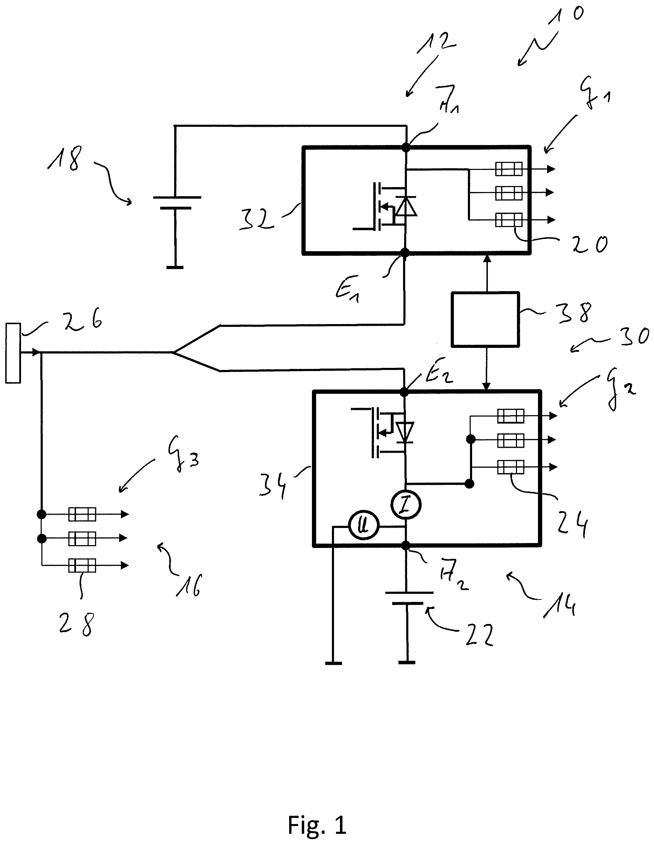

In Fig. 1 ist ein erstes Ausgestaltungsbeispiel eines Bordnetzes 10 in prinzipieller Art dargestellt. Das Bordnetz 10 kann insbesondere bei Fahrzeugen eingesetzt werden, welche für ein hochautomatisiertes bzw. ein autonomes Verfahren ausgebildet sind.

Das Bordnetz 10 umfasst drei Netzbereiche 12, 14, 16. Der erste Netzbereich 12 umfasst eine wiederaufladbare erste Gleichspannungsquelle 18, beispielsweise eine Lithium-Ionen-Batterie, und eine erste Gruppe G₁ von Verbrauchern 20 elektrischer Energie. Gleichermaßen umfasst der zweite Netzbereich 14 eine wiederaufladbare zweite Gleichspannungsquelle 22, beispielsweise eine Lithium-Ionen-Batterie, sowie eine zweite Gruppe G₂ von Verbrauchern 24 elektrischer Energie. Die beiden Gleichspannungsquellen 18, 22 können beispielsweise dazu ausgelegt sein, für den ersten Netzbereich 12 bzw. den zweiten Netzbereich 14 eine Nennspannung im Bereich von 12V zu liefern.

Der dritte Netzbereich 16 umfasst eine dritte Gleichspannungsquelle 26 sowie eine dritte Gruppe G₃ von Verbrauchern 28 elektrischer Energie. Die dritte Gleichspannungsquelle 26 kann beispielsweise einen Gleichstrom/Gleichstrom-Wandler umfassen, der die von einer in einem elektromotorisch betriebenen Fahrzeug vorgesehenen Traktionsbatterie bereitgestellte Spannung, welche im Bereich von mehreren 100 V liegt, auf die auch für den ersten Netzbereich 12 und den zweiten Netzbereich 14 vorgesehene Nennspannung, also beispielsweise eine Spannung im Bereich von 12V, herabsetzt. Alternativ oder zusätzlich kann die dritte Gleichspannungsquelle 26 einen durch ein Antriebsaggregat, wie z. B. eine Brennkraftmaschine, antreibbaren Generator umfassen, dessen gleichgerichtete Ausgangsspannung dann ebenfalls im Bereich der Nennspannung für den ersten Netzbereich 12 und den zweiten Netzbereich 14 liegt.

Die den Netzbereichen 12, 14, 16 zugeordneten Verbraucher 20, 24, 28 elektrischer Energie sind im Wesentlichen so aufgegliedert, dass dem ersten Netzbereich 12 und dem zweiten Netzbereich 14 sicherheitsrelevante Verbraucher zugeordnet sind. Dies betrifft beispielsweise das Lenksystem, welches beispielsweise zwei Lenkmotoren umfassen kann, von welchen einer der ersten Gruppe G₁ und der andere der zweiten Gruppe G₂ zugeordnet sein kann. Weiter können als derartige sicherheitsrelevante Verbraucher elektrischer Energie ein Bremssystem einerseits und ein elektronisches Stabilisierungssystem andererseits vorgesehen sein. Das Bremssystem kann beispielsweise der ersten Gruppe G₁ zugeordnet sein, während das elektronische Stabilisierungssystem der zweiten Gruppe G₂ zugeordnet sein kann. Da auch ein elektronisches Stabilisierungssystem dazu vorgesehen ist, insbesondere beim Kurvenfahren eines Fahrzeugs durch Bremseingriff dieses zu stabilisieren, arbeiten diese beiden Systeme redundant, so dass im Falle des Ausfalls von einem der Systeme das andere die Funktionalität zum Bremsen eines Fahrzeugs übernehmen kann.

Der dritten Gruppe G₃ von Verbrauchern 28 elektrischer Energie können weniger sicherheitsrelevante Verbraucher zugeordnet sein, wie z. B. eine Sitzheizung, eine Innenbeleuchtung, eine Lenkradheizung und dergleichen. Der Ausfall derartiger weniger sicherheitsrelevanter Systembereiche beeinträchtigt nicht grundsätzlich die Funktionalität eines Fahrzeugs und ermöglicht insbesondere den fortgesetzten Betrieb desselben, zumindest um das Fahrzeug zu einer Werkstatt zu bringen.

Das Bordnetz 10 umfasst ferner eine allgemein mit 30 bezeichnete Trennschalteranordnung. Die Trennschalteranordnung 30 umfasst in Zuordnung zum ersten Netzbereich 12 einen ersten Trennschalter 32 und umfasst in Zuordnung zum zweiten Netzbereich 14 einen zweiten Trennschalter 34. Die beiden intern als elektronische Schaltungen aufgebauten Trennschalter 32, 34, welche grundsätzlich nach Art einer so genannten Q-Diode (Quasi-Diode) aufgebaut sein können bzw. arbeiten können, weisen jeweils einen ersten Eingangsanschluss E₁ bzw. einen zweiten Eingangsanschluss E₂ und einen ersten Ausgangsanschluss A₁ sowie einen zweiten Ausgangsanschluss A₂ auf. In einem Leiter-Zustand sind die Trennschalter 32, 34 niederohmig und leiten den elektrischen Strom in beiden Richtungen, also vom jeweiligen Eingangsanschluss E₁, E₂ zum jeweiligen Ausgangsanschluss A₁, A₂ und auch in entgegengesetzter Richtung ohne nennenswerten elektrischen Widerstand. In einem Diode-Zustand sperren die Trennschalter 32, 34 den Stromfluss vom jeweiligen Ausgangsanschluss A₁, A₂ zum jeweiligen Eingangsanschluss E₁, E₂, sind jedoch in Flussrichtung vom Eingangsanschluss E₁, E₂ zum jeweiligen Ausgangsanschluss A₁, A₂ leitend und weisen somit grundsätzlich die Funktionalität einer Diode auf.

In jedem der beiden Netzbereiche 12, 14 ist die jeweilige Gleichspannungsquelle 18, 22 mit ihrem Plus-Pol an den Ausgangsanschluss A₁ bzw. A₂ des jeweils zugeordneten Trennschalters 32, 34 angeschlossen, während der jeweilige MinusPol der Gleichspannungsquellen 18, 22 an die Fahrzeugmasse angeschlossen sein kann. Auch die Gruppen G₁, G₂ von Verbrauchern 20, 24 elektrischer Energie sind an den Ausgangsanschluss A₁ bzw. A₂ angeschlossen, so dass bei in ihren jeweiligen Diode-Zustand geschalteten Trennschaltern 32, 34 die erste Gleichspannungsquelle 18 ausschließlich die Verbraucher 20 der ersten Gruppe G₁ speist und die zweite Gleichspannungsquelle 22 ausschließlich die Verbraucher 24 der zweiten Gruppe G₂ speist.

Die Eingangsanschlüsse E₁, E₂ sind miteinander und mit dem dritten Netzbereich 16 und somit auch den Verbrauchern 28 der dritten Gruppe G₃ verbunden. Während bei in ihren Diode-Zustand geschalteten Trennschaltern 32, 34 die Verbraucher 28 der dritten Gruppe G₃ ausschließlich durch die dritte Gleichspannungsquelle 26 gespeist werden können, können in diesem Zustand sowohl die Verbraucher 20 der ersten Gruppe G₁, als auch die Verbraucher 24 der zweiten Gruppe G₂ aus der dritten Gleichspannungsquelle 26 gespeist werden. Gleichermaßen können die erste Gleichspannungsquelle 18 und die zweite Gleichspannungsquelle 22 unabhängig davon, in welchem Schaltzustand die Trennschalter 32, 34 sind, durch die dritte Gleichspannungsquelle 26 über die Trennschalter 32 bzw. 34 geladen werden.

Die beiden Trennschalter 32, 34 sind weiterhin so aufgebaut, dass dann, wenn bei in den jeweiligen Leiter-Zustand geschalteten Trennschaltern 32 bzw. 34 ein jeweiliger Rückstrom, also ein in der Sperrrichtung des jeweiligen Trennschalters 32, 34 vom Ausgangsanschluss A₁, A₂ zum Eingangsanschluss E₁, E₂ fließender elektrischer Strom, eine zugeordnete erste Stromschwelle übersteigt, diese in ihren Diode-Zustand umschalten. Vorzugsweise weisen für ein symmetrisches Schaltverhalten die beiden Trennschalter 32, 34 jeweils die gleiche Stromschwelle auf, die im Bereich von 5A bis 90A, vorzugsweise bei etwa 50A bis 70A, liegen kann.

Das Vorsehen derartiger Stromschwellen hat zur Folge, dass bei Auftreten eines übermäßig großen Rückstroms und den dadurch induzierten Schaltvorgang in den Diode-Zustand ein Spannungseinbruch in einem jeweiligen Netzbereich 12 bzw. 14, aus welchem heraus ein derartiger zu einer starken Belastung der jeweils zugeordneten Gleichspannungsquelle 18, 20 und somit gegebenenfalls zu einem Spannungseinbruch führender Stromfluss auftritt, verhindert wird. Tritt beispielsweise im Bereich des dritten Netzbereichs 16 oder des zweiten Netzbereichs 14 ein zu einem übermäßigen Stromfluss führender Defekt auf, beispielsweise ein Kurzschluss, wird dann, wenn zunächst beide Trennschalter 32, 34 der Trennschalteranordnung 30 in ihrem Geschlossen-Zustand, also in ihrem Leiter-Zustand sind, der erste Trennschalter 32, wenn der über diesen fließende elektrische Strom die zugeordnete Stromschwelle von beispielsweise 50A übersteigt, in seinen Diode-Zustand schalten. Es ist somit gewährleistet, dass ein Spannungseinbruch im ersten Netzbereich 12 nicht auftritt und die Verbraucher 20 der ersten Gruppe G₁ zuverlässig betrieben werden können. Ist der Defekt im dritten Netzbereich 16, wird auch im zweiten Netzbereich 14 ein entsprechend hoher Stromfluss in Sperrrichtung, also ein entsprechend hoher Rückstrom auftreten. Übersteigt dieser die zugeordnete Stromschwelle des zweiten Trennschalters 34, geht auch dieser in seinen Diode-Zustand, also seinen offenen Zustand über, so dass auch der zweite Netzbereich 14 vor einem Spannungseinbruch geschützt wird und gewährleistet ist, dass die diesem zugeordneten Verbraucher 24 der zweiten Gruppe G₂ weiterhin zuverlässig aus der zweiten Gleichspannungsquelle 22 betrieben werden können.

Dieses Umschalten in den Leiter-Zustand, das bei Überschreiten einer jeweiligen Stromschwelle des Rückstroms über die Trennschalter 32, 34 erfolgt, tritt dann auf, wenn beispielsweise bei einem Defekt im dritten Netzbereich 16 die dritte Gleichspannungsquelle 26 nicht mehr dazu in der Lage ist, den durch den Defekt veranlassten Mehr-Strom aufzubringen. Solange dieser übermäßige Stromfluss durch die dritte Gleichspannungsquelle 26 aufgebracht werden kann, wird ein die jeweiligen Stromschwellen der Trennschalter 32, 34 übersteigender Rückstrom über diese hinweg nicht auftreten. Erst dann, wenn die dritte Gleichspannungsquelle 26 nicht mehr dazu in der Lage ist, beispielsweise aufgrund eines Kurzschlusses in einem der Verbraucher 28, diesem Strom zu liefern, wird der Rückstrom im ersten Trennschalter 32 bzw. im zweiten Trennschalter 34 die zugeordnete Stromschwelle überschreiten und somit das Umschalten in den Diode-Zustand auslösen.

Als weitere Sicherheitsmaßnahmen können für die Trennschalter 32, 34 eine Unterspannungsschwelle bzw. eine Überspannungsschwelle vorgesehen sein. Die Unterspannungsschwelle kann beispielsweise im Bereich von 0,5V bis 2V unter der für den ersten Netzbereich 12 bzw. den zweiten Netzbereich 14 vorgesehenen Nennspannung, also beispielsweise einer Spannung von etwa 12V, liegen. Unterschreitet im jeweiligen Netzbereich 12 bzw. 14 die Spannung bezüglich des Massepotentials diese Unterspannungsschwelle, schaltet bei zuvor eingestelltem Leiter-Zustand ein jeweiliger Trennschalter 32 bzw. 34 in seinen Diode-Zustand, um einen weiteren Spannungseinbruch zu unterbinden. Dabei ist im Allgemeinen die Auslegung auch unter Berücksichtigung der Leistungsfähigkeit der Gleichspannungsquellen 18, 22 so gewählt, dass bei korrekter Funktionalität zunächst die Stromschwelle überschritten wird, was bedeutet, dass die Unterspannungsschwelle an sich nicht zum Tragen kommt. Bei einem Defekt im Bereich eines jeweiligen Trennschalters 32, 34, welcher eine korrekte Erfassung des Rückstroms oder dessen Berücksichtigung nicht zulässt, kommt dann die Unterspannungsschwelle zum Tragen.

Eine für die jeweiligen Trennschalter 32, 34 vorgesehene Überspannungsschwelle kann im Bereich von 2V bis 6V, beispielsweise etwa 4V, über der für die Netzbereiche 12 bzw. 14 vorgegebenen Nennspannung von beispielsweise etwa 12 V liegen. Dies bedeutet, dass auch dann, wenn diese Überspannungsschwelle überschritten wird, ein jeweiliger zuvor im Leiter-Zustand gehaltener Trennschalter 32, 34 in seinen Diode-Zustand übergeht. Ein derartiger Zustand mit in einem Netzbereich 12 bzw. 14 auftretender Überspannung kann beispielsweise ausgelöst werden durch eine externe Einwirkung auf einen der Verbraucher 20 bzw. 24. Beispielsweise das Berühren eines Randsteins oder eines sonstigen Hindernisses mit einem durch einen Lenkmotor eines Lenksystems gelenkten Rad führt zu einer externen Krafteinwirkung und somit einer Bewegung des Rads, was wiederum zur Folge hat, dass ein oder jeder Lenkmotor des Lenksystems kurzzeitig als Generator wirksam ist und eine sehr hohe Spannung abgibt. Um eine Beeinträchtigung der Verbraucher 20 bzw. 24 elektrischer Energie des jeweils anderen Netzbereichs 12 bzw. 14 zu verhindern, kann in einem derartigen Zustand der Trennschalter 32 oder 34 desjenigen Netzbereichs 12, 14, in welchem ein derartiger Zustand auftritt, in seinen Diode-Zustand geschaltet werden.

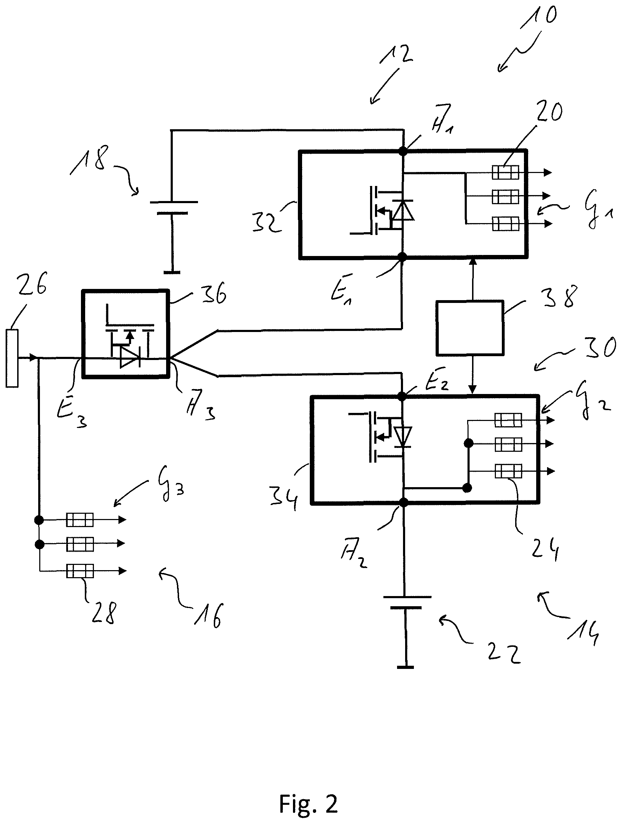

Eine alternative Ausgestaltung eines Bordnetzes 10 ist in Fig. 2 dargestellt. Bei dieser Ausgestaltung umfasst die Trennschalteranordnung 30 zusätzlich einen dritten Trennschalter 36, welcher hinsichtlich seines Aufbaus bzw. seiner Funktionalität dem ersten Trennschalter 32 bzw. dem zweiten Trennschalter 34 entsprechen kann. Da die dritte Gleichspannungsquelle 26 und die dritte Gruppe G₃ von Verbrauchern 28 elektrischer Energie mit dem dritten Eingangsanschluss Es des dritten Trennschalters 36 verbunden sind, kann durch den dritten Trennschalter 36 der dritte Netzbereich 16 mit seiner dritten Gleichspannungsquelle 26 und den Verbrauchern 28 der dritten Gruppe G₃ vom ersten Netzbereich 12 bzw. vom zweiten Netzbereich 14 entkoppelt werden, so dass im Diode-Zustand des dritten Trennschalters 36 unabhängig vom Schaltzustand des ersten Trennschalters 32 bzw. des zweiten Trennschalters 34 ein Stromfluss aus dem ersten Netzbereich 12 oder dem zweiten Netzbereich 14 zu dem dritten Netzbereich 16 nicht auftreten kann. Gleichwohl kann aber aufgrund der Leitfähigkeit im Diode-Zustand unabhängig vom Schaltzustand der Trennschalter 32, 34, 36 jede der beiden Gleichspannungsquellen 18, 22 durch die dritte Gleichspannungsquelle 26, geladen werden. Auch kann unabhängig vom Schaltzustand der Trennschalter 32, 34, 36 jeder Verbraucher 20, 24 der Gruppen G₁, G₂ durch die dritte Gleichspannungsquelle 26 mit elektrischer Energie gespeist werden.

Das Vorsehen des dritten Trennschalters 36 ermöglicht es, dann, wenn im Bereich der Verbraucher 28 bzw. im dritten Netzbereich 16 ein zu einem übermäßig großen Stromfluss führender Defekt auftritt, die beiden Trennschalter 32, 34 in ihrem Leiter-Zustand zu halten und somit den ersten Netzbereich 12 und den zweiten Netzbereich 14 weiterhin miteinander zu koppeln, um die Verbraucher 20 der ersten Gruppe G₁ und die Verbraucher 24 der zweiten Gruppe G₂ weiterhin redundant aus den beiden Gleichspannungsquellen 18, 22 speisen zu können und somit ein sehr hohes Sicherheitsniveau zu erreichen. Dies ist besonders daher vorteilhaft, da die im ersten Netzbereich 12 bzw. im zweiten Netzbereich 14 vorgesehenen Verbraucher 20, 24 bzw. grundsätzlich die diesen Netzbereichen 12, 24 zugeordneten elektrischen Komponenten für ein höheres Sicherheitsniveau ausgelegt sind und somit auch wesentlich kostenaufwendiger sind, als die weniger sicherheitsrelevanten Verbraucher 28 der dritten Gruppe G₃. Somit ist die Wahrscheinlichkeit, dass ein zu einem übermäßigen Stromfluss bzw. zu einem Spannungseinbruch führender Defekt im dritten Netzbereich 16 auftritt, deutlich größer, als dass ein derartiger Defekt im ersten Netzbereich 12 oder im zweiten Netzbereich 14 auftritt.

Dem dritten Trennschalter 36 sind gleichermaßen eine Stromschwelle bzw. eine Unterspannungsschwelle und eine Überspannungsschwelle zugeordnet. Da bei einem zu einem übermäßigen Stromfluss führenden Defekt im dritten Netzbereich 16 ein derartiger Stromfluss bei zunächst in ihrem Leiter-Zustand gehaltenen Trennschaltern 32, 34, 36 sowohl aus dem ersten Netzbereich 12, als auch dem zweiten Netzbereich 14 heraus auftreten wird, addieren sich diese Rückströme über den ersten Trennschalter 32 und den zweiten Trennschalter 34 am dritten Ausgangsanschluss A₃ des dritten Trennschalters 36. Es ist daher vorteilhaft, für den dritten Trennschalter 36 eine über der Stromschwelle des ersten Trennschalters 32 bzw. des zweiten Trennschalters 34 liegende Stromschwelle zu definieren. Ist beispielsweise für den ersten Trennschalter 30 bzw. den zweiten Trennschalter 34 eine Stromschwelle für den jeweiligen Rückstrom im Bereich von 50A festgelegt, kann für den dritten Trennschalter 36 eine Stromschwelle im Bereich von 70A festgelegt sein. Auch die in Zuordnung zum dritten Trennschalter 36 vorgegebene Unterspannungsschwelle und Überspannungsschwelle können einen größeren Abstand zur Nennspannung von beispielsweise 12V aufweisen, als die dem ersten Trennschalter 32 und dem zweiten Trennschalter 34 zugeordnete Unterspannungsschwelle bzw. Überspannungsschwelle.

Bei den vorangehend beschriebenen Bordnetzen 10 sind vorteilhafterweise die Trennschalter 32, 34 und ggf. auch 36 der Trennschalteranordnung 30 in Verbindung mit einem Ansteuersystem 38, über welches den Trennschaltern 32, 34, 36 beispielsweise auch Information über den aktuellen Betriebszustand eines Fahrzeugs mitgeteilt wird. Somit wird es möglich, die Trennschalter 32, 34, 36 auch abhängig vom Betriebszustand eines Fahrzeugs in definierte Schaltzustände zu bringen. Beispielsweise kann vorgesehen sein, dass die Trennschalter 32, 34 und ggf. 36 dann in ihren Leiter-Zustand geschaltet werden bzw. in diesem gehalten werden, wenn ein Fahrzeug deaktiviert ist, also beispielsweise parkt. Im Leiter-Zustand fließen in derartigen Trennschaltern Ruheströme von weniger als 100µA, was zu einer sehr geringen Belastung der Gleichspannungsquellen 18 bzw. 22 führt. Beim Schalten in den jeweiligen Diode-Zustand bzw. beim Halten der Trennschalter 32, 34, 36 im Dioden-Zustand ist deren Energieverbrauch deutlich größer, was ein schnelleres Entladen der Gleichspannungsquellen 18, 22 zur Folge hätte.

Bei normaler, also durch einen Fahrer durchgeführter Fahrt, sind grundsätzlich die Trennschalter 32, 34 und ggf. 36 in ihrem Leiter-Zustand. Tritt, wie vorangehend dargelegt, ein zu einem übermäßig großen Rückstrom bzw. einem Spannungseinbruch führender Defekt auf oder löst eine äußere Einwirkung eine Spannungsspitze in einem Netzbereich aus, schaltet ein diesem oder einem anderen Netzbereich zugeordneter Trennschalter in seinen Diode-Zustand, um den Netzbereich beispielsweise vor einem Spannungseinbruch zu schützen. Dies ist insbesondere daher vorteilhaft, da dann, wenn beispielsweise bei einem Unfall der zweite Netzbereich 14 derart beschädigt wird, dass dort ein Kurzschluss auftritt, auch dann, wenn auch der dem zweiten Netzbereich zugeordnete zweite Trennschalter 34 nicht mehr korrekt angesteuert werden kann, der noch funktionsfähige Trennschalter 32 des ersten Netzbereichs 12 den ersten Netzbereich 12 abkoppelt und somit einen sicheren Betrieb der diesem ersten Netzbereich 12 zugeordneten sicherheitsrelevanten Verbraucher 20 der ersten Gruppe G₁ ermöglicht. Aus diesem Grunde ist es besonders vorteilhaft, die Netzbereiche mit sicherheitsrelevanten Verbrauchern, also den ersten Netzbereich 12 und den zweiten Netzbereich 14, in einem Fahrzeug derart räumlich getrennt voneinander anzuordnen, dass die Gefahr, dass bei einem Unfall beide Netzbereiche 12, 14 geschädigt werden, vergleichsweise gering ist. Beispielsweise kann einer der Netzbereiche, also im Wesentlich die jeweilige Gleichspannungsquelle und der zugeordnete Trennschalter, im vorderen Bereich eines Fahrzeugs untergebracht sein, während die Gleichspannungsquelle und der Trennschalter des anderen sicherheitsrelevanten Netzbereichs im hinteren Bereich des Fahrzeugs untergebracht sein können.

Auch dann, wenn ein derart ausgelegtes Fahrzeug in einem autonomen Fahrmodus ist, sind grundsätzlich die Trennschalter 32, 34 und ggf. 36 der Trennschalteranordnung 30 im Leiter-Zustand. Tritt in diesem Fahrzustand ein Defekt in irgendeinem der Netzbereiche auf, der zu einem übermäßig großen Rückstrom führt, kann die durch Umschalten in den Leiter-Zustand durchzuführende und vorangehend erläuterte Trennung vorgenommen werden. Das Zulassen eines Rückstroms bis zum Erreichen der zugeordneten Stromschwelle ermöglicht gleichermaßen, dass auch dann, wenn beispielsweise die Verbraucher 28 der dritten Gruppe G₃ das Bordnetz 10 stark belasten, beispielsweise da gleichzeitig viele oder alle Verbraucher der dritten Gruppe G₃ betrieben werden, diese über die bei noch nicht erreichter Stromschwelle im Leiter-Zustand gehaltenen Trennschalter 32, 34 und ggf. 36 auch aus den Gleichspannungsquellen 18, 22 gespeist werden können. Dies ist besonders dann vorteilhaft, wenn die dritte Gleichspannungsquelle 26 aufgrund eines Defekts als Energielieferant ausfällt.

Es ist weiter darauf hinzuweisen, dass insbesondere dem ersten Netzbereich 12 und dem zweiten Netzbereich 14 zusätzliche Sicherungen, beispielsweise Schmelzsicherungen, zugeordnet sein können, um die sicherheitsrelevanten Verbraucher 20 bzw. 24 einzeln gegen Überlastung zu sichern. Derartige Schmelzsicherungen können beispielsweise auf einen Stromfluss von 20A ausgelegt sein. Tritt im Bereich eines Verbrauchers 20 bzw. 24 ein zu einem übermäßigen Stromfluss führender Defekt auf, wird zunächst der Trennschalter des jeweils anderen Netzbereichs in seinen Dioden-Zustand übergehen, um diesen abzukoppeln. Nach Auslösen einer derartigen Schmelzsicherung und dem dadurch herbeigeführten Abkoppeln eines zu einem übermäßigen Stromfluss führenden Verbrauchers kann der zuvor in seinen Diode-Zustand geschaltete Trennschalter wieder schließen, also in seinen Leiter-Zustand, zurückschalten.

Ferner ist darauf hinzuweisen, dass die im Allgemeinen mit einem oder mehreren Halbleiterschaltelementen, wie z. B. MOSFET-Schaltelementen, aufgebauten Trennschalter, vermittels eines z.B. in diese integrierten Mikroprozessors regelmäßig oder fortlaufend einer Diagnose unterzogen werden können, um beispielsweise durch Durchführen von Schalttests sicherzustellen, dass diese korrekt funktionieren und bei Bedarf sofort in den erforderlichen Schaltzustand übergehen können. Hierzu können beispielsweise die Ströme jeweiliger Ladungspumpen, die Gatetreiber und Gatespannungen überwacht und analysiert werden. Eine derartige Diagnose kann selbstverständlich auch aus dem Ansteuersystem heraus erfolgen. Auch die Funktionalitäten bzw. Schaltungsanordnungen zum Erfassen des Stromflusses über einen jeweiligen Trennschalter sowie der im jeweils zugeordneten Netzbereich vorhandenen Netzspannung und zum Vergleichen mit jeweils zugeordneten Schwellenwerten sind, wie in Fig. 1 anhand des Trennschalters 34 veranschaulicht, vorteilhafterweise in die jeweiligen Trennschalter integriert.

## Patentansprüche

1. Bordnetz für ein Fahrzeug, umfassend:
- einen ersten Netzbereich (12) mit einer wiederaufladbaren ersten Gleichspannungsquelle (18) und einer ersten Gruppe (G₁) von Verbrauchern (20) elektrischer Energie,
- einen zweiten Netzbereich (14) mit einer wiederaufladbaren zweiten Gleichspannungsquelle (22) und einer zweiten Gruppe (G₂) von Verbrauchern (24) elektrischer Energie,
- eine zwischen den ersten Netzbereich (12) und den zweiten Netzbereich (14) geschaltete Trennschalteranordnung (30) mit einem ersten Trennschalter (32) und einem zweiten Trennschalter (34), wobei jeder Trennschalter (32, 34) von erstem Trennschalter (32) und zweitem Trennschalter (34) in einem Leiter-Zustand den Stromfluss zwischen seinem Eingangsanschluss (E₁, E₂) und seinem Ausgangsanschluss (A₁, A₂) in beiden Richtungen zulässt und in einem Diode-Zustand einen Stromfluss nur vom Eingangsanschluss (E₁, E₂) zum Ausgangsanschluss (A₁, A₂) zulässt, wobei der Ausgangsanschluss (A₁) des ersten Trennschalters (32) mit dem ersten Netzbereich (12) verbunden ist, der Eingangsanschluss (E₁) des ersten Trennschalters (32) mit dem Eingangsanschluss (E₂) des zweiten Trennschalters (34) verbunden ist und der Ausgangsanschluss (A₂) des zweiten Trennschalters (34) mit dem zweiten Netzbereich (16) verbunden ist,
- einen dritten Netzbereich (16) mit einer dritten Gleichspannungsquelle (26) und einer dritten Gruppe (G₃) von Verbrauchern (28) elektrischer Energie, wobei der Eingangsanschluss (E₁) des ersten Trennschalters (32) und der Eingangsanschluss (E₂) des zweiten Trennschalters (34) mit dem dritten Netzbereich (16) verbunden sind,
**dadurch gekennzeichnet, dass** der erste Trennschalter (32) dazu ausgebildet ist, bei in seinen Leiter-Zustand geschaltetem ersten Trennschalter (32) dann in seinen Diode-Zustand zu schalten, wenn ein im Leiter-Zustand über den ersten Trennschalter (32) fließender Rückstrom eine erste Stromschwelle übersteigt, oder/und dass der zweite Trennschalter (34) dazu ausgebildet ist, bei in seinen Leiter-Zustand geschaltetem zweiten Trennschalter (34) dann in seinen Diode-Zustand zu schalten, wenn ein im Leiter-Zustand über den zweiten Trennschalter (34) fließender Rückstrom eine zweite Stromschwelle übersteigt.

2. Bordnetz nach Anspruch 1, **dadurch gekennzeichnet, dass** die erste Stromschwelle oder/und die zweite Stromschwelle in einem Bereich von 5A bis 90A, vorzugsweise bei etwa 50A bis 70A, liegt.

3. Bordnetz nach Anspruch 1 oder 2, **dadurch gekennzeichnet, dass** die erste Stromschwelle der zweiten Stromschwelle entspricht.

4. Bordnetz nach einem der vorangehenden Ansprüche, **dadurch gekennzeichnet, dass** der erste Trennschalter (32) dazu ausgebildet ist, bei in seinen Leiter-Zustand geschaltetem ersten Trennschalter (32) dann in seinen Diode-Zustand zu schalten, wenn eine Netzspannung im ersten Netzbereich (12) eine erste Unterspannungsschwelle unterschreitet, oder/und dass der zweite Trennschalter (34) dazu ausgebildet ist, bei in seinen Leiter-Zustand geschaltetem zweiten Trennschalter (34) dann in seinen Diode-Zustand zu schalten, wenn eine Netzspannung im zweiten Netzbereich (14) eine zweite Unterspannungsschwelle unterschreitet.

5. Bordnetz nach Anspruch 4, **dadurch gekennzeichnet, dass** die erste Unterspannungsschwelle oder/und die zweite Unterspannungsschwelle eine im Bereich von 0,5V bis 2V, vorzugsweise etwa 1V, unter einer für den ersten Netzbereich (12) und den zweiten Netzbereich (14) vorgesehenen Nennspannung liegende Netzspannung ist, oder/und dass die erste Unterspannungsschwelle der zweiten Unterspannungsschwelle entspricht.

6. Bordnetz nach einem der vorangehenden Ansprüche, **dadurch gekennzeichnet, dass** der erste Trennschalter (32) dazu ausgebildet ist, bei in seinen Leiter-Zustand geschaltetem ersten Trennschalter (32) dann in seinen Diode-Zustand zu schalten, wenn eine Netzspannung im ersten Netzbereich (12) eine erste Überspannungsschwelle überschreitet, oder/und dass der zweite Trennschalter (34) dazu ausgebildet ist, bei in seinen Leiter-Zustand geschaltetem zweiten Trennschalter (34) dann in seinen Diode-Zustand zu schalten, wenn eine Netzspannung im zweiten Netzbereich (14) eine zweite Überspannungsschwelle überschreitet.

7. Bordnetz nach Anspruch 6, **dadurch gekennzeichnet, dass** die erste Überspannungsschwelle oder/und die zweite Überspannungsschwelle eine im Bereich von 2V bis 6V, vorzugsweise etwa 4V, über einer für den ersten Netzbereich (12) und den zweiten Netzbereich (14) vorgesehenen Nennspannung liegende Netzspannung ist, oder/und dass die erste Überspannungsschwelle der zweiten Überspannungsschwelle entspricht.

8. Bordnetz nach einem der vorangehenden Ansprüche, **dadurch gekennzeichnet, dass** die Trennschalteranordnung (30) einen dritten Trennschalter (36) umfasst, wobei der dritte Trennschalter (36) in einem Leiter-Zustand den Stromfluss zwischen seinem Eingangsanschluss (E₃) und seinem Ausgangsanschluss (A₃) in beiden Richtungen zulässt und in einem Diode-Zustand einen Stromfluss nur vom Eingangsanschluss (E₃) zum Ausgangsanschluss (A₃) zulässt, wobei der Eingangsanschluss (E₃) des dritten Trennschalters (36) mit dem dritten Netzbereich (16) verbunden ist und der Ausgangsanschluss (A₃) des dritten Trennschalters (36) mit dem Eingangsanschluss (E₁) des ersten Trennschalters (32) und dem Eingangsanschluss (E₂) des zweiten Trennschalters (34) verbunden ist.

9. Bordnetz nach Anspruch 8, **dadurch gekennzeichnet, dass** der dritte Trennschalter (36) dazu ausgebildet ist, bei in seinen Leiter-Zustand geschaltetem dritten Trennschalter (36) dann in seinen Diode-Zustand zu schalten, wenn ein im Leiter-Zustand über den dritten Trennschalter (36) fließender Rückstrom eine dritte Stromschwelle übersteigt.

10. Bordnetz nach Anspruch 9, **dadurch gekennzeichnet, dass** die dritte Stromschwelle in einem Bereich von 5A bis 90A, vorzugsweise bei etwa 50A bis 70A, liegt.

11. Bordnetz nach Anspruch 8 oder 9, **dadurch gekennzeichnet, dass** die dritte Stromschwelle höher ist als die erste Stromschwelle oder/und die zweite Stromschwelle.

12. Bordnetz nach einem der Ansprüche 8-11, **dadurch gekennzeichnet, dass** der dritte Trennschalter (36) dazu ausgebildet ist, bei in seinen Leiter-Zustand geschaltetem dritten Trennschalter (36) dann in seinen Diode-Zustand zu schalten, wenn eine Netzspannung im dritten Netzbereich (16) eine dritte Unterspannungsschwelle unterschreitet, oder/und dass der dritte Trennschalter (36) dazu ausgebildet ist, bei in seinen Leiter-Zustand geschaltetem dritten Trennschalter (36) dann in seinen Diode-Zustand zu schalten, wenn eine Netzspannung im dritten Netzbereich (16) eine dritte Überspannungsschwelle überschreitet.

13. Bordnetz nach Anspruch 12, **dadurch gekennzeichnet, dass** die dritte Unterspannungsschwelle eine im Bereich von 0,5V bis 2V, vorzugsweise etwa 1V, unter einer für den dritten Netzbereich (16) vorgesehenen Nennspannung liegende Netzspannung ist, oder/und dass die dritte Überspannungsschwelle eine im Bereich von 2V bis 6V, vorzugsweise etwa 4V, über einer für den dritten Netzbereich (16) vorgesehenen Nennspannung liegende Netzspannung ist.

14. Bordnetz nach einem der vorangehenden Ansprüche, **dadurch gekennzeichnet, dass** wenigstens ein, vorzugsweise jeder Trennschalter (32, 34, 36) bei deaktiviertem Fahrzeug in seinem Leiter-Zustand ist.

15. Bordnetz nach einem der vorangehenden Ansprüche, **dadurch gekennzeichnet, dass** die dritte Gleichspannungsquelle (26) einen vorzugsweise durch eine Brennkraftmaschine angetriebenen Generator umfasst, oder/und dass die dritte Gleichspannungsquelle (26) eine Hochspannungsbatterie und einen Gleichstrom/Gleichstrom-Wandler umfasst.

## Claims

1. On-board power supply system for a vehicle, comprising:
- a first network area (12) with a rechargeable first d.c. voltage source (18) and with a first group (G₁) of electrical energy consumers (20),
- a second network area (14) with a rechargeable second d.c. voltage source (22) and with a second group (G₂) of electrical energy consumers (24),
- a circuit breaker device (30) connected between the first network area (12) and the second network area (14) with a first circuit breaker (32) and with a second circuit breaker (34), wherein each circuit breaker (32, 34) of the first circuit breaker (32) and second circuit breaker (34) allows the flow of current between its input terminal (E₁, E₂) and its output terminal (A₁, A₂) in both directions in a conductor state and it allows a flow of current in a diode state only from the input terminal (E₁, E₂) to the output terminal (A₁, A₂), wherein the output terminal (A₁) of the first circuit breaker (32) is connected to the first network area (12), the input terminal (E₁) of the first circuit breaker (32) is connected to the input terminal (E₂) of the second circuit breaker (34), and the output terminal (A₂) of the second circuit breaker (34) is connected to the second network area (16), and
- a third network area (16) with a third d.c. voltage source (26) and with a third group (G₃) of electrical energy consumers (28), wherein the input terminal (E₁) of the first circuit breaker (32) and the input terminal (E₂) of the second circuit breaker (34) are connected to the third network area (16),
**characterized in that** the first circuit breaker (32) is configured to switch into its diode state when the first circuit breaker (32) has been switched into its conductor state when a back current flowing over the first circuit breaker (32) exceeds a first current threshold, or/and that the second circuit breaker (34) is configured to switch into its diode state when the second circuit breaker (34) has been switched into its conductor state when a back current flowing over the second circuit breaker (34) exceeds a second current threshold.

2. On-board power supply system in accordance with claim 1, **characterized in that** the first current threshold or/and the second current threshold is in a range of 5 A to 90 A, preferably at about 50 A to 70 A.

3. On-board power supply system in accordance with claim 1 or claim 2, **characterized in that** the first current threshold corresponds to the second current threshold.

4. On-board power supply system in accordance with one of the above claims, **characterized in that** the first circuit breaker (32) is configured to switch into its diode state when the first circuit breaker (32) has been switched into its conductor state when a network voltage in the first network area (12) drops below a first low voltage threshold, or/and that the second circuit breaker (34) is configured to switch into its diode state when the second circuit breaker (34) has been switched into its conductor state when a network voltage in the second network area (14) drops below a second low voltage threshold.

5. On-board power supply system in accordance with claim 4, **characterized in that** the first low voltage threshold or/and the second low voltage threshold is a network voltage that is below a nominal voltage provided for the first network area (12) and for the second network area (14) in the range of 0.5 V to 2 V and preferably about 1 V, or/and that the first low voltage threshold corresponds to the second low voltage threshold.

6. On-board power supply system in accordance with one of the above claims, **characterized in that** the first circuit breaker (32) is configured to switch into its diode state when the first circuit breaker (32) has been switched into its conductor state when a network voltage in the first network area (12) exceeds a first overvoltage threshold, or/and that the second circuit breaker (34) is configured to switch into its diode state when the second circuit breaker (34) has been switched into its conductor state when a network voltage in the second network area (14) exceeds a second overvoltage threshold.

7. On-board power supply system in accordance with claim 6, **characterized in that** the first overvoltage threshold or/and the second overvoltage threshold is a network voltage above a nominal voltage provided for the first network area (12) and for the second network area (14) in the range of 2 V to 6 V and preferably about 4 V, or/and that the first overvoltage threshold corresponds to the second overvoltage threshold.

8. On-board power supply system in accordance with one of the above claims, **characterized in that** the circuit breaker device (30) comprises a third circuit breaker (36), wherein the third circuit breaker (36) allows the flow of current between its input terminal (E₃) and its output terminal (A₃) in both directions in a conductor state and it allows a flow of current only from the input terminal (E₃) to the output terminal (A₃) in a diode state, wherein the input terminal (E₃) of the third circuit breaker (36) is connected to the third network area (16) and the output terminal (A₃) of the third circuit breaker (36) is connected to the input terminal (E₁) of the first circuit breaker (32) and to the input terminal (E₂) of the second circuit breaker (34).

9. On-board power supply system in accordance with claim 8, **characterized in that** the third circuit breaker (36) is configured to switch into its diode state when the third circuit breaker (36) has been switched into its conductor state when a back current flowing in the conductor state over the third circuit breaker (36) exceeds a third current threshold.

10. On-board power supply system in accordance with claim 9, **characterized in that** the third current threshold is in a range of 5 A to 90 A and preferably at about 50 A to 70 A.

11. On-board power supply system in accordance with claim 8 or 9, **characterized in that** the third current threshold is higher than the first current threshold or/and the second current threshold.

12. On-board power supply system in accordance with one of the claims 8-11, **characterized in that** the third circuit breaker (36) is configured to switch into its diode state when the third circuit breaker (36) has been switched into its conductor state when a network voltage in the third network area (16) drops below a third low voltage threshold, or/and that the third circuit breaker (36) is configured to switch into its diode state when the third circuit breaker (36) has been switched into its conductor state when a network voltage in the third network area (16) exceeds a third overvoltage threshold.

13. On-board power supply system in accordance with claim 12, **characterized in that** the third low voltage threshold is a network voltage below a nominal voltage intended for the third network area (16) in the range of 0.5 V to 2 V and preferably about 1 V, or/and that the third overvoltage threshold is a network voltage above a nominal voltage intended for the third network area (16) in the range of 2 V to 6 V and preferably about 4 V.

14. On-board power supply system in accordance with one of the above claims, **characterized in that** at least one and preferably each circuit breaker (32, 34, 36) is in its conductor state when the vehicle has been deactivated.

15. On-board power supply system in accordance with one of the above claims, **characterized in that** the third d.c. voltage source (26) comprises a generator driven preferably by an internal combustion engine, or/and that the third d.c. voltage source (26) comprises a high-voltage battery and a d.c./d.c. converter.

## Revendications

1. Système d'alimentation électrique de bord pour un véhicule, comprenant :
- une première zone de réseau (12) avec une première source de tension continue rechargeable (18) et un premier groupe (G₁) de consommateurs d'énergie électrique (20),
- une deuxième zone de réseau (14) avec une deuxième source de tension continue rechargeable (22) et un deuxième groupe (G₂) de consommateurs d'énergie électrique (24),
- un dispositif de disjoncteur (30) connecté entre la première zone de réseau (12) et la deuxième zone de réseau (14) avec un premier disjoncteur (32) et un deuxième disjoncteur (34), dans lequel chaque disjoncteur (32, 34) du premier disjoncteur (32) et du deuxième disjoncteur (34) permet le flux de courant entre sa borne d'entrée (E₁, E₂) et sa borne de sortie (A₁,A₂) dans les deux directions dans un état conducteur et il permet un flux de courant dans un état de diode seulement de la borne d'entrée (E₁, E₂) à la borne de sortie (A₁,A₂), dans lequel la borne de sortie (A₁) du premier disjoncteur (32) est connectée à la première zone de réseau (12), la borne d'entrée (E₁) du premier disjoncteur (32) est connectée à la borne d'entrée (E₂) du deuxième disjoncteur (34), et la borne de sortie (A₂) du deuxième disjoncteur (34) est connectée à la deuxième zone de réseau (16), et
- une troisième zone de réseau (16) avec une troisième source de tension continue (26) et avec un troisième groupe (G₃) de consommateurs d'énergie électrique (28), dans lequel la borne d'entrée (E₁) du premier disjoncteur (32) et la borne d'entrée (E₂) du deuxième disjoncteur (34) sont connectées à la troisième zone de réseau (16),
**caractérisé en ce que** le premier disjoncteur (32) est configuré pour passer à l'état de diode lorsque le premier disjoncteur (32) est passé à l'état conducteur lorsqu'un courant de retour circulant sur le premier disjoncteur (32) dépasse un premier seuil de courant, ou/et **en ce que** le deuxième disjoncteur (34) est configuré pour passer à l'état de diode lorsque le deuxième disjoncteur (34) est passé à l'état conducteur lorsqu'un courant de retour circulant sur le deuxième disjoncteur (34) dépasse un deuxième seuil de courant.

2. Système d'alimentation électrique de bord selon la revendication 1, **caractérisé en ce que** le premier seuil de courant ou/et le deuxième seuil de courant est compris entre 5 A et 90 A, de préférence entre 50 A et 70 A environ.

3. Système d'alimentation électrique de bord selon la revendication 1 ou la revendication 2, **caractérisé en ce que** le premier seuil de courant correspond au deuxième seuil de courant.

4. Système d'alimentation électrique de bord selon l'une des revendications précédentes, **caractérisé en ce que** le premier disjoncteur (32) est configuré pour passer à son état de diode lorsque le premier disjoncteur (32) est passé à son état conducteur lorsqu'une tension de réseau dans la première zone de réseau (12) est inférieure à un premier seuil de basse tension, ou/et **en ce que** le deuxième disjoncteur (34) est configuré pour passer à son état de diode lorsque le deuxième disjoncteur (34) est passé à son état conducteur lorsqu'une tension de réseau dans la deuxième zone de réseau (14) est inférieure à un deuxième seuil de basse tension.

5. Système d'alimentation électrique de bord selon la revendication 4, **caractérisé en ce que** le premier seuil de basse tension ou/et le deuxième seuil de basse tension est une tension de réseau qui est inférieure à une tension nominale fournie pour la première zone de réseau (12) et pour la deuxième zone de réseau (14) dans la plage de 0,5 V à 2 V et de préférence environ 1 V, ou/et **en ce que** le premier seuil de basse tension correspond au deuxième seuil de basse tension.

6. Système d'alimentation électrique de bord selon l'une des revendications précédentes, **caractérisé en ce que** le premier disjoncteur (32) est configuré pour passer à son état de diode lorsque le premier disjoncteur (32) est passé à son état conducteur lorsqu'une tension de réseau dans la première zone de réseau (12) dépasse un premier seuil de surtension, ou/et **en ce que** le deuxième disjoncteur (34) est configuré pour passer à l'état de diode lorsque le deuxième disjoncteur (34) est passé à son état conducteur lorsqu'une tension de réseau dans la deuxième zone de réseau (14) dépasse un deuxième seuil de surtension.

7. Système d'alimentation électrique de bord selon la revendication 6, **caractérisé en ce que** le premier seuil de surtension ou/et le deuxième seuil de surtension est une tension de réseau supérieure à une tension nominale fournie pour la première zone de réseau (12) et pour la deuxième zone de réseau (14) dans la plage de 2 V à 6 V et de préférence environ 4 V, ou/et **en ce que** le premier seuil de surtension correspond au deuxième seuil de surtension.

8. Système d'alimentation électrique de bord selon l'une des revendications précédentes, **caractérisé en ce que** le dispositif disjoncteur (30) comprend un troisième disjoncteur (36), dans lequel le troisième disjoncteur (36) permet la circulation du courant entre sa borne d'entrée (E₃) et sa borne de sortie (A₃) dans les deux sens dans un état conducteur et il permet une circulation du courant uniquement de la borne d'entrée (E₃) à la borne de sortie (A₃) dans un état de diode, dans lequel la borne d'entrée (E₃) du troisième disjoncteur (36) est connectée à la troisième zone de réseau (16) et la borne de sortie (A₃) du troisième disjoncteur (36) est connectée à la borne d'entrée (E₁) du premier disjoncteur (32) et à la borne d'entrée (E₂) du deuxième disjoncteur (34).

9. Système d'alimentation électrique de bord selon la revendication 8, **caractérisé en ce que** le troisième disjoncteur (36) est configuré pour passer à l'état de diode lorsque le troisième disjoncteur (36) a été commuté à l'état conducteur lorsqu'un contre-courant circulant à l'état conducteur sur le troisième disjoncteur (36) dépasse un troisième seuil de courant.

10. Système d'alimentation électrique de bord selon la revendication 9, **caractérisé en ce que** le troisième seuil de courant est compris entre 5 A et 90 A et de préférence entre 50 A et 70 A environ.

11. Système d'alimentation électrique de bord selon la revendication 8 ou 9, **caractérisé en ce que** le troisième seuil de courant est plus élevé que le premier seuil de courant ou/et le deuxième seuil de courant.

12. Système d'alimentation électrique de bord selon l'une des revendications 8 à 11, **caractérisé en ce que** le troisième disjoncteur (36) est configuré pour passer à l'état de diode lorsque le troisième disjoncteur (36) est passé à l'état conducteur lorsqu'une tension de réseau dans la troisième zone de réseau (16) tombe en dessous d'un troisième seuil de basse tension, ou/et **en ce que** le troisième disjoncteur (36) est configuré pour passer à l'état de diode lorsque le troisième disjoncteur (36) est passé à l'état conducteur lorsqu'une tension de réseau dans la troisième zone de réseau (16) dépasse un troisième seuil de surtension.

13. Système d'alimentation électrique de bord selon la revendication 12, **caractérisé en ce que** le troisième seuil de basse tension est une tension de réseau inférieure à une tension nominale destinée à la troisième zone de réseau (16) dans la plage de 0,5 V à 2 V et de préférence environ 1 V, ou/et **en ce que** le troisième seuil de surtension est une tension de réseau supérieure à une tension nominale destinée à la troisième zone de réseau (16) dans la plage de 2 V à 6 V et de préférence environ 4 V.

14. Système d'alimentation électrique de bord selon l'une des revendications précédentes, **caractérisé en ce qu'**au moins un et de préférence chaque disjoncteur (32, 34, 36) est dans son état conducteur lorsque le véhicule a été désactivé.

15. Système d'alimentation électrique de bord selon l'une des revendications précédentes, **caractérisé en ce que** la troisième source de tension continue (26) comprend un générateur entraîné de préférence par un moteur à combustion interne, ou/et **en ce que** la troisième source de tension continue (26) comprend une batterie haute tension et un convertisseur courant continu/courant continu.
